(19)

Europäisches
Patentamt
European
Patent Office
Office européen
des brevets

(11) **EP 3 808 700 A1**

(12) **EUROPEAN PATENT APPLICATION**

(43) Date of publication:
**21.04.2021 Bulletin 2021/16**

(21) Application number: **19203932.9**

(22) Date of filing: **17.10.2019**

(51) Int Cl.:
*C01B 21/06* [(2006.01)]     *C01B 21/082* [(2006.01)]
*B01D 53/22* [(2006.01)]     *B01D 67/00* [(2006.01)]
*B01D 71/64* [(2006.01)]

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ecole Polytechnique Fédérale de
Lausanne (EPFL)
1015 Lausanne (CH)**

(72) Inventors:
• **AGRAWAL, Kumar Varoon
1800 VEVEY (CH)**
• **VILLALOBOS, Luis Francisco
1800 VEVEY (CH)**

(74) Representative: **reuteler & cie SA
Chemin de la Vuarpillière 29
1260 Nyon (CH)**

(54) **CRYSTALLINE POLY(TRIAZINE IMIDE) MEMBRANES AND USES THEREOF**

(57)     The invention relates to methods for the preparation of highly crystalline poly(triazine imide) in the form of platelets, atom-thick layers or membranes thereof and resulting products thereof, in particular useful for the preparation of gas separation membranes, in particular for He or $H_2$ sieving from lager molecules.

Figure 1

EP 3 808 700 A1

**Description**

**Field of the Invention**

The present invention pertains generally to the field of crystalline carbon nitride membranes, in particular poly(triazine imide) and membranes thereof, notably in the context of gas separation, for instance $H_2$ sieving. The invention more specifically relates to filters using atom-thick poly(triazine imide) nanosheets.

**Background of the Invention**

Carbon nitride compounds with high N to C ratios and graphitic to polymeric structures have been investigated as potential next-generation materials for incorporation in devices for energy conversion and storage as well as for optoelectronic and catalysis applications. The materials are built from C- and N-containing heterocycles with heptazine or triazine rings linked *via* sp²-bonded N atoms ($N(C)_3$ units) or -NH- groups (Miller et al., 2017, Physical Chemistry Chemical Physics, 24, 15613). The compounds that are likely to contain layered elements within their structures can be generally referred to as "gCN" to reflect the fact that carbon and nitrogen are the main components and that at least some elements of the structure can be compared with the extended planes of graphite. The nomenclature "$g-C_3N_4$" generally refers to those materials that are determined to have a composition that closely matches that ideal stoichiometry, with minimal incorporation of hetero-atoms such as H or O, and that are determined to be based on sp²-bonded C atoms. Among the carbon nitride materials, the production of relatively well-crystallized bulk carbon nitride compounds was reported by Demazeau et al., 1998, Rev. High Pressure Sci. Technol., 7, 1345-1347, who used solvothermal reactions involving melamine and cyanuric chloride ($C_3N_3Cl_3$) in the presence of organic bases (triethylamine or di-isopropylethylamine), under high pressure conditions (140 MPa).

Crystalline $g-C_3N_4$, in particular poly(triazine imide) or PTI is a graphitic material composed of atom-thick layers which can be cleaved both mechanically and chemically into thin sheets and scrolls analogous to the carbon-only systems graphite and graphene. *Bojdys et al.* (Bojdys et al., 2008, Chem. - A Eur. J,. 14, 8177-8182) who carried out a condensation reaction from dicyandiamide (DCDA, $C_2N_4H_4$) in a molten eutectic LiCl/KCl or LiBr/KBr salt mixture at 600°C suggested that the PTI layers contained polyheptazine structural units, while *Wirnhier et al.* (Wirnhier et al, 2011, Chem. - A Eur. J., 17, 3213-3221) showed that the carbon nitride sheets were based on the polytriazine imide motifs. The molten salt synthesis process produces PTILiCl or PTI·LiBr structures containing Cl⁻ or Br⁻ ions intercalated between the PTI layers along with Li⁺ ions incorporated in the carbon nitride plane. Up to now, the conventional synthesis of PTI is done by heating a mixture of the precursor (i.e., melamine, dicyandiamide, cyanamide, or urea) and a eutectic mixture of LiCl and KCl salts in a quartz ampule under a closed *vacuum* system. During the synthesis, the eutectic salt mixture melts increasing the mobility of the $g-C_3N_4$ intermediates. The increased mobility is generally believed to be critical for ordering of the intermediates and their subsequent condensation (*Wirnhier et al., 2011, supra*). The ampule-based synthesis is complicated, can be unsafe because of the build-up of ammonia (can reach up to 12 bar), typically yields only 60-80 mg of crystalline PTI/Li⁺Cl⁻, and is a bottleneck for the scale-up of PTI. The synthesis of crystalline PTI using scalable ambient pressure conditions has therefore remained elusive, producing amorphous carbon nitride instead when the quartz ampule (*vacuum*) is substituted with a ceramic crucible (ambient pressure) (Schwinghammer et al., 2013, Angew. Chemie Int. Ed., 52, 2436-2439).

Advances in exfoliation of layered PTI materials, including intercalation and ultrasonication, has led to the synthesis of few-layered PTI nanosheets. Electron microscopy of PTI nanosheets in these reports revealed a honeycomb structure, characteristic of PTI bilayer or multilayers because of the AB-stacking of PTI layers (Miller et al., 2017, Nano Lett. 17, 5891-5896; Jia et al., 2018, Angew. Chemie., 130, 12838-12842; *Schwinghammer et al., 2013, supra*). On the other hand, several reports claiming the synthesis and exfoliation of $g-C_3N_4$ actually dealt with polymeric polymeric carbon nitride called melon (Liebig's melon consisting of one-dimensional chains of heptazine (tris-s-triazine) organized in two-dimensional layers) which is not fully condensed within the layer with heptazine units in each layer held together by weak intralayer hydrogen bonds (Kessler et al., 2017, Nat. Rev. Mater. 2, 17030). A major challenge in the wide-scale use of PTI-membranes is that the layered PTI (precursor to membranes) is synthesized in a complicated vacuum-ampule-based solid-state synthesis route with a milligram yield (*Wirnhier et al., 2011, supra; Schwinghammer et al., 2014, supra*). The scale-up of *vacuum* ampule-based synthesis is extremely difficult and can be potentially unsafe.

Therefore, the development of new methods of fabricating single layer poly(triazine imide) nanosheets in a safe and cost effective manner is highly attractive in view of the large-scale deployment of the nanoporous two-dimensional nanosheets that has been hampered so far by the above described technical limitations.

**Summary of the Invention**

The present invention is based on the unexpected finding that immobilizing poly(triazine imide) precursor (melamine) under a layer of molten salts during the thermal condensation without mixing the precursor with the salts allows obtaining high-quality PTI crystals. Those findings are completely unexpected since it was believed that the molten salts were the necessary solvent for the transport of the intermediates of the thermal condensation reaction and therefore the molten salts should be well-mixed with the precursors to allow the reaction to occur (*Wirnhier et al., 2011, supra; Bojdys et al., 2008, supra*).

A general object of this invention is to provide an efficient route a synthesis of crystalline PTI layered material that can be easily exfoliated in monolayers.

One of the specific objects of this invention is to provide an efficient method of preparation of highly crystalline PTI layered material at ambient pressure.

It is advantageous to provide a method of preparation of highly crystalline PTI layered material which is scalable for the production of larger quantities (at least several grams) of material in a safe manner.

Another of the specific objects of this invention is to provide an efficient method of preparation of highly crystalline atom-thick PTI layers without inducing any significant morphological damages (tears, curling, etc.) in PTI nanosheets.

It is advantageous to provide a method of preparation of monolayers of crystalline PTI material with a high yield.

It is advantageous to provide a monolayer of crystalline PTI with precisely-defined molecular-sized pores.

Another of the specific objects of this invention is to provide a method for the preparation of a gas selective filter comprising a crystalline PTI membrane, which is cost effective, has good gas selectivity and high performance and to provide a gas selective filter comprising a crystalline PTI membrane.

It is advantageous to prepare a dispersed suspension of PTI nanosheets for the formation of filters of the invention in liquid medium, e.g. by filtration.

It is advantageous to provide a gas selective filter using atom-thick layers of crystalline PTI for gas separation, in particular He or $H_2$ sieving (e.g. $H_2/CO_2$, $H_2/CH_4$, $H_2/N_2$ separation).

It is advantageous to provide a gas selective filter by assembling exfoliated crystalline PTI layers into a film essentially free of significant morphological damages (tears, curling, etc.).

Objects of this invention have been achieved by providing a method for the preparation of a crystalline poly(triazine imide) (PTI) layered material according to claim 1.

Objects of this invention have been achieved by providing a method for the preparation of an atom-thick crystalline poly(triazine imide) (PTI) layer according to claim 12.

Objects of this invention have been achieved by providing a method for the preparation of a gas selective poly(triazine imide) (PTI) membrane according to claim 13.

Objects of this invention have been achieved by providing a gas selective separation filter according to claim 14.

Objects of this invention have been achieved by providing a use of a gas selective filter according to claim 16.

Disclosed herein is a method for the preparation of a crystalline poly(triazine imide) (PTI) layered material comprising the steps of:

a) placing a carbon nitride precursor in a reaction container such that the carbon nitride precursor presents an exposed surface;
b) completely covering said exposed surface of said carbon nitride precursor with a Li-based salt;
c) reacting said Li-based salt with said carbon nitride precursor at a temperature which is at or above the fusion temperature of the Li-based salt, at a pressure in the range of 0,8 to 1,2 bars, preferably at atmospheric pressure, for at least 1 hour;
d) cooling and removing the Li-based salt;
e) collecting said crystalline poly(triazine imide) (PTI) layered material.

The cooling of the reaction medium may be down to room temperature.

The obtained product in the form of crystalline poly(triazine imide) (PTI) layered material is dried in the collecting step.

In an advantageous embodiment, the product obtained under step e) is used in combination with a carbon nitride precursor (e.g. as a mixture) under step a) in a further cycle of synthesis a) to e) to increase crystallinity of the end product.

Also disclosed herein is a method for the preparation of highly crystalline atom-thick PTI nanosheets (layers) comprising the steps of:

ia) providing a crystalline poly(triazine imide) (PTI) layered material under anhydrous atmosphere;
iia) mixing the said crystalline poly(triazine imide) (PTI) layered material into an aprotic solvent under heating and stirring;
iiia) collecting the atom-thick PTI exfoliated layers.

Also disclosed herein is a method for the preparation of a gas selective PTI membrane comprising the steps of:

**ib)** providing a mixture of crystalline PTI exfoliated layers in a sol vent;
**iib)** passing the mixture under ib) through a filter support;
**iiic)** obtaining a gas selective PTI membrane.

Also disclosed herein is a gas selective filter wherein the PTI layer is made with a method according to the invention.

Also disclosed herein is a gas selec-ting Hz and/or He from $CO_2$ or $N_2$ and from larger molecular weight hydrocarbons (e.g. $C_2H_4$) comprising an assembly ofPTI layers

Also disclosed herein is a use of a gas selective filter comprising a highly crystalline PTI membrane for gas separation, in particular for separating $H_2$ and/or He from $CO_2$ or $N_2$ and from larger molecular weight hydrocarbons (e.g. $C_2H_4$).

In an advantageous embodiment, the $H_2$ permeance of the PTI membrane is from about $10^{-8}$ mol m$^{-2}$ s$^{-1}$ Pa$^{-1}$ to about $10^{-6}$ mol m$^{-2}$ s$^{-1}$ Pa$^{-1}$ (e.g. 5 x $10^{-7}$ at 250 °C).

Other features and advantages of the invention will be apparent from the claims, detailed description, and figures.

**Brief Description of the drawings**

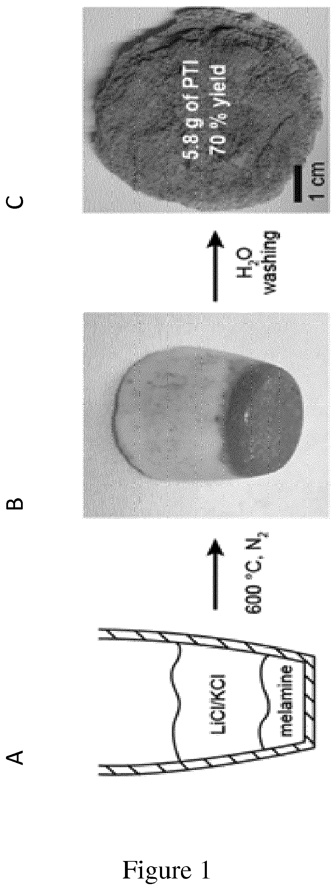

**Figure 1** is an illustration of the synthesis of crystalline PTI under the ambient pressure condition according to the invention with a schematic illustration of Li-based salt placed over a layer of carbon nitride precursor in a reaction container (A) and pictures showing the high yield of layered PTI (brownish in color) at the bottom of the reactant (B & C) as detailed under Example 1.

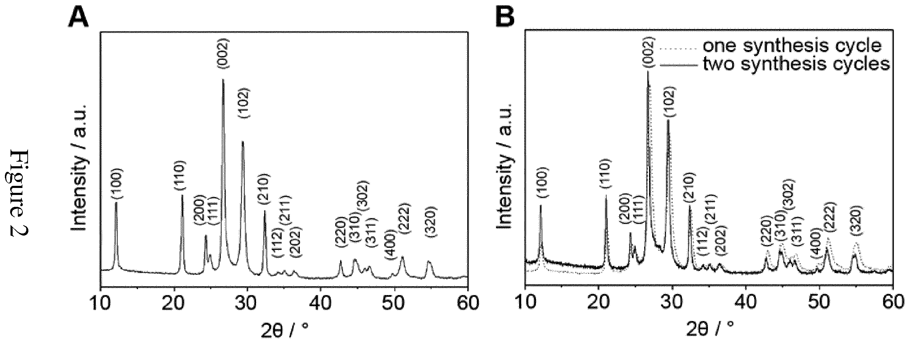

**Figure 2** provides a comparison of XRD of layered PTI platelets obtained in a closed system (i.e., quartz ampule under vacuum) as reported originally by *Wirnhier et al., 2011, supra* **(A)** and by a method of the invention **(B)** as described in Example 1.

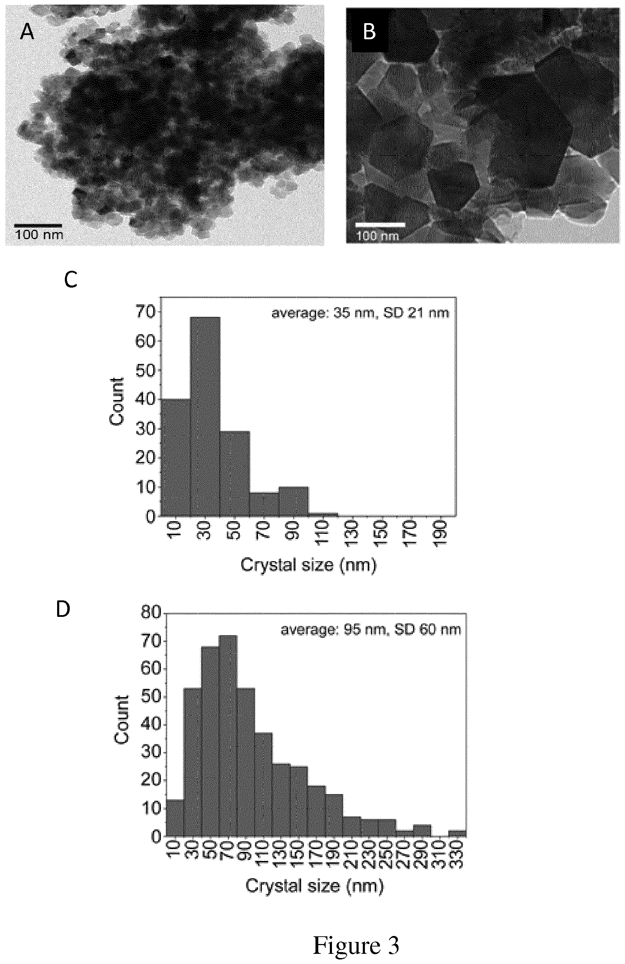

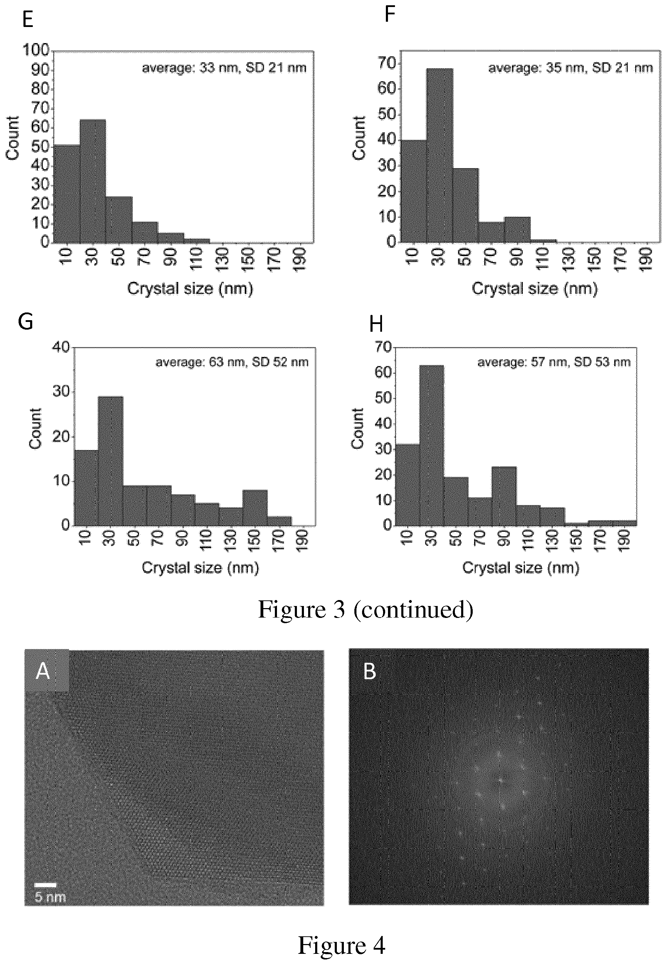

**Figure 3** supports the effect on the size of the PTI crystals of the number of synthesis cycles (A) and of the time a reaction (30 hours to 30 days) as described in Example 1. Bright-field TEM image of PTI crystals obtained after one synthesis cycle of two days **(A)** and after two synthesis cycles (the first cycle 2 days and the second cycle 6 days) **(B)**; PTI crystal size histogram as measured from the TEM images for one synthesis cycle of 2 days using 500 mg of melamine as precursor **(C)**; for two synthesis cycles (the first cycle 2 days and the second cycle 6 days for a total of 8 days of synthesis) using a mixture of 500 mg of melamine in the first step and 100 mg of PTI crystals from the first cycle as precursor of the second step with 500 mg of melamine **(D)**; for a single cycle for a total synthesis time of **(E)** 30 hours, **(F)** 2 days, **(G)** 6 days and **(H)** 30 days. In C, E-H the precursor amount was 500 mg melamine.

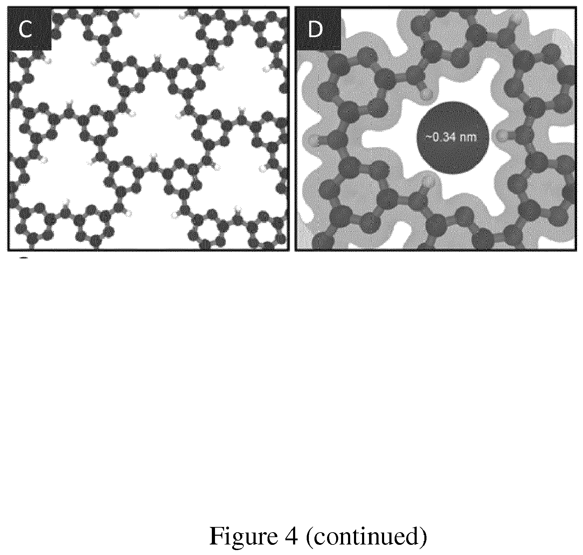

**Figure 4** shows the high-resolution transmission electron microscopy (HRTEM) images of the edge of a PTI crystal after two synthesis cycles of two and six days revealing a honeycomb structure as a result of the AB stacking of layers **(A)** and its corresponding Fourier Transformed (FFT) **(B)**; **C and D**: schematic representation of the structure of an atom-thick PTI layer.

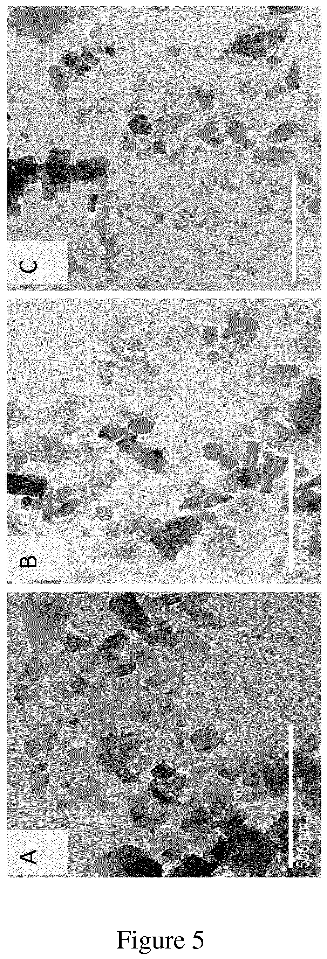

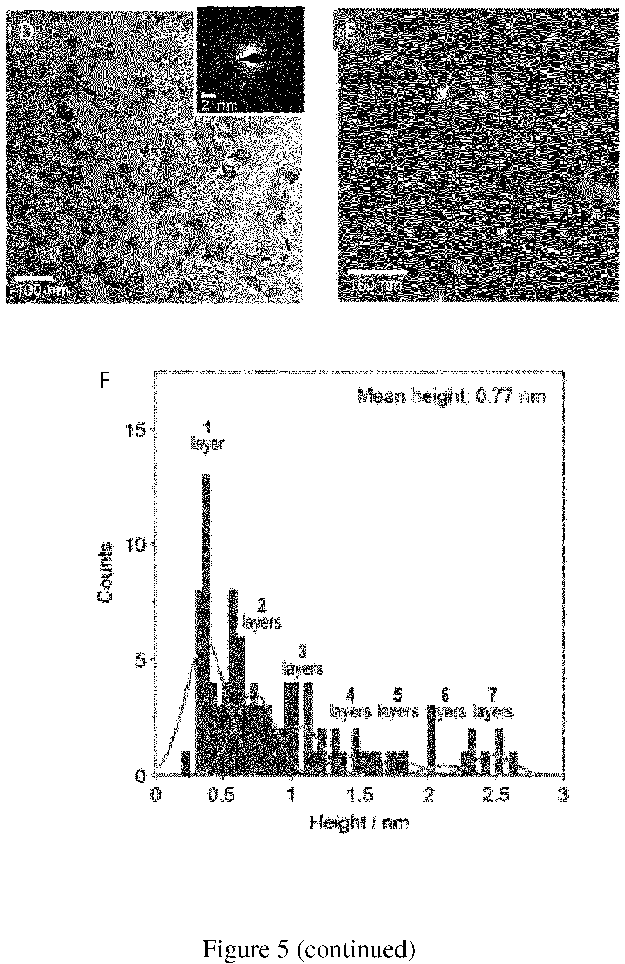

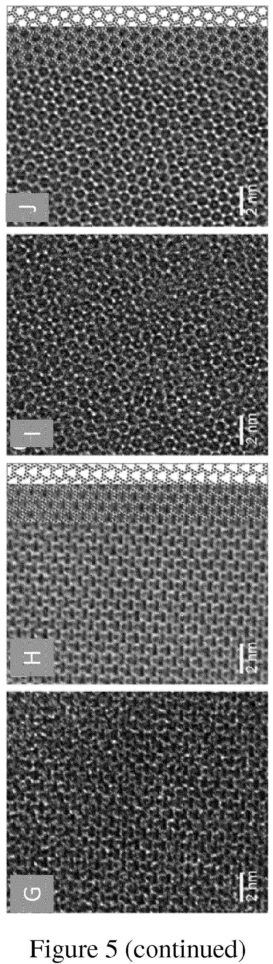

**Figure 5** shows the evolution of the exfoliation of PTI in anhydrous DMAc at 100°C as described in Example 2 as monitored by bright-field TEM images from the solution after stirring for **(A)** 6 hours, **(B)** 12 hours and **(C)** 2 days, the dispersion of PTI nanosheets after two days of exfoliation inside an anhydrous DMAc solution at 100 °C and a centrifugation-based purification **(D)** (inset shows an selected area electron diffraction (SAED) pattern of PTI nanosheets) and an atomic force microscope (AFM) image of PTI nanosheets **(E). F:** Nanosheets thickness histogram (n>100) as determined by AFM. A sum of Gaussians with a FWHM of 0.35 nm shows the approximate range of bins that correspond to each number of layers. **G to I**: HRTEM images of a single-layer PTI nanosheet **(G)** and **(H)** its corresponding filtered image with the structure of single-layer PTI superimposed, and of a few-layered PTI nanosheets **(I)** and **(J)** its corresponding filtered image with the structure of bilayer PTI superimposed.

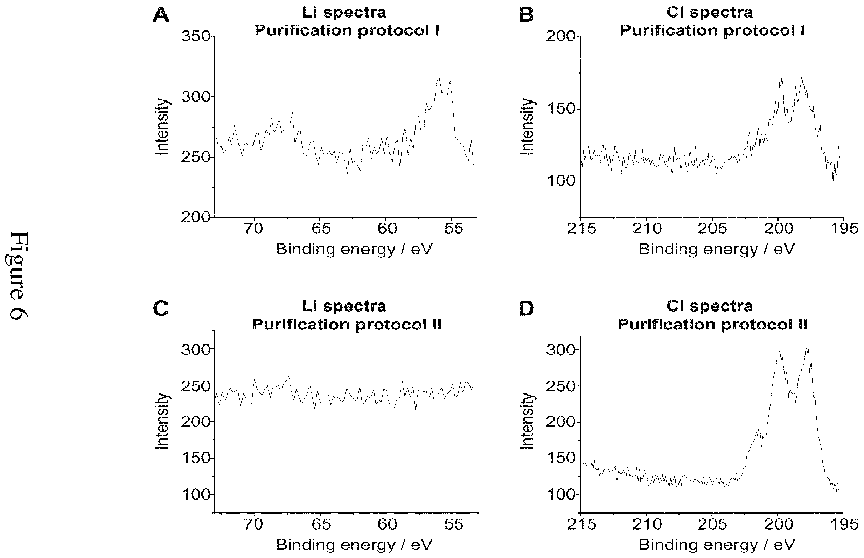

**Figure 6** represents the XPS spectra of PTI nanosheets as described under Example 2 after exfoliation (**A**) Li and (**B**) Cl spectra of PTI nanosheets purified using 3 centrifugation steps of 10 minutes each at 5'000, 1'0000, and 15'000 g respectively (purification protocol I). **(C)** Li and **(D)** Cl spectra of PTI nanosheets purified using a similar procedure but doing the last step at 15'000 g for 3 hours instead to obtain predominantly single-layer PTI nanosheets (purification protocol II).

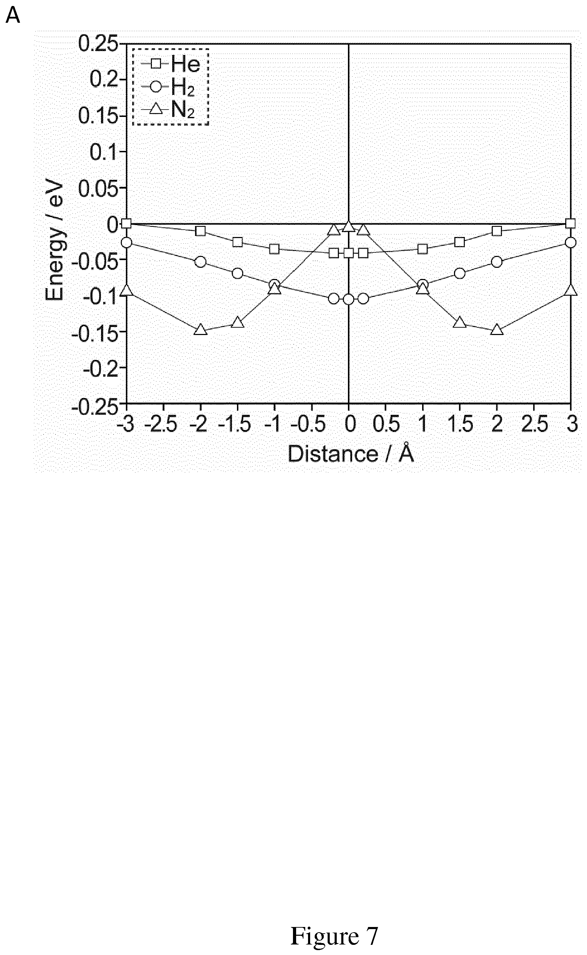

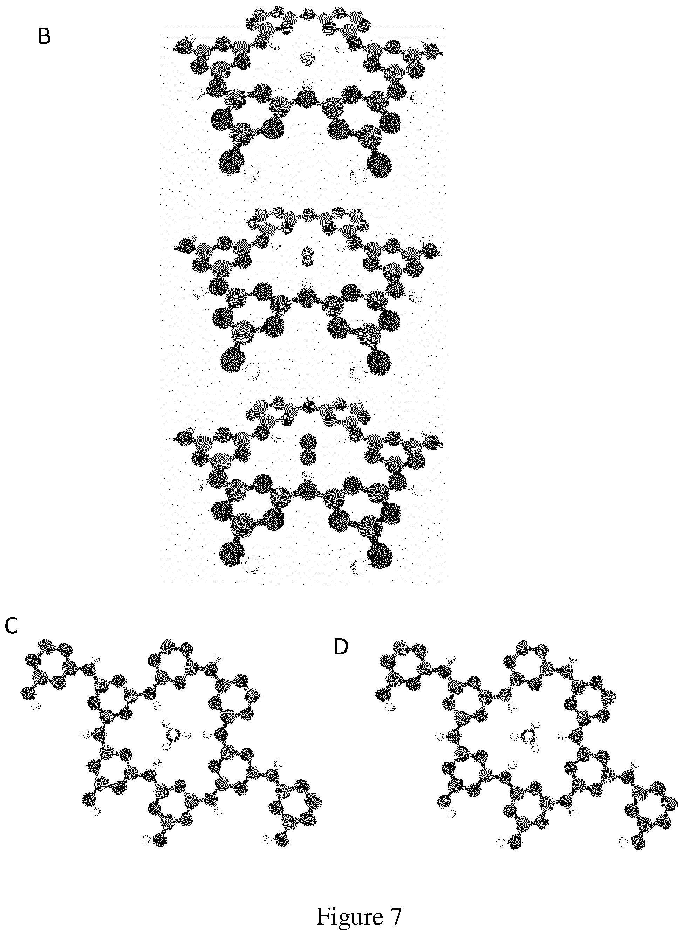

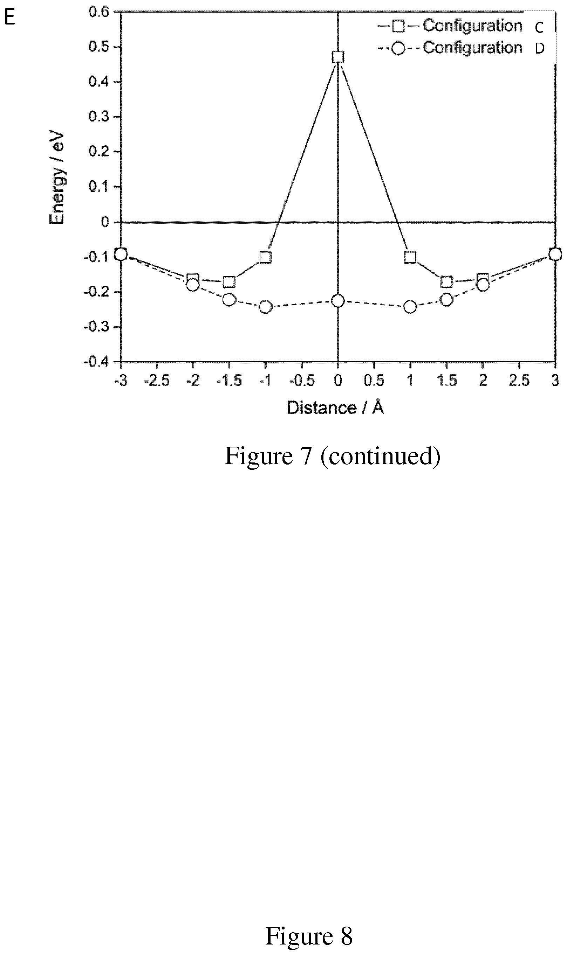

**Figure 7** represents the molecular sieving properties of PTI layers of the invention as simulated by the calculation of potential energy surfaces for He, $H_2$, and $N_2$ on a PTI monolayer **(A)** by DFT as described under Example 3. The orientation of He, $H_2$, and $N_2$ at the center of the PTI nanopore is shown in **(B).** The simulated interactions of the methane molecule with PTI single-layer nanosheet in a configuration of the methane molecule with its hydrogen atoms aligned with the hydrogen atoms at the edge of the pore of the PTI nanosheet **(C)** and in a configuration where the hydrogen atoms of methane are as far as possible from the hydrogen atoms at the edge of the pore of the PTI nanosheet **(D)** and the simulated potential energy profile of methane on a PTI monolayer at the two configurations shown in C (plain line) and D (dotted line).

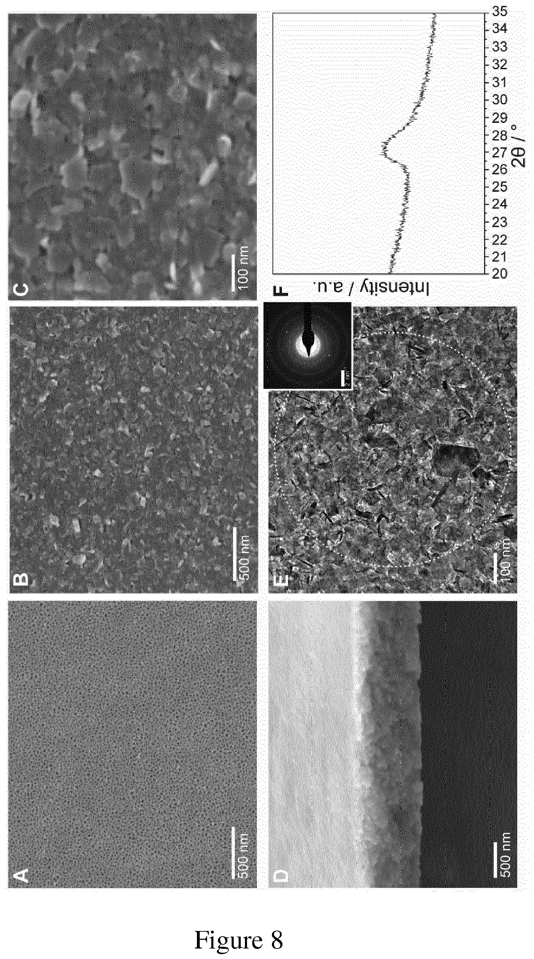

**Figure 8** shows SEM **(B-D)** and TEM **(E)** images of PTI films of the invention prepared by *vacuum* filtration as described in Example 3 and of the Anapore support before deposit of the nanosheets **(A)** and XRD pattern of the isolated PTI film formed by the assembly of PTI nanosheets **(F)**. **B:** PTI nanosheets on the Anapore support; **C:** High magnification of the surface of the PTI film; **D:** Cross section of an isolated PTI film; **E:** Bright-field TEM image of an isolated PTI film. Inset shows the SAED of the marked area.

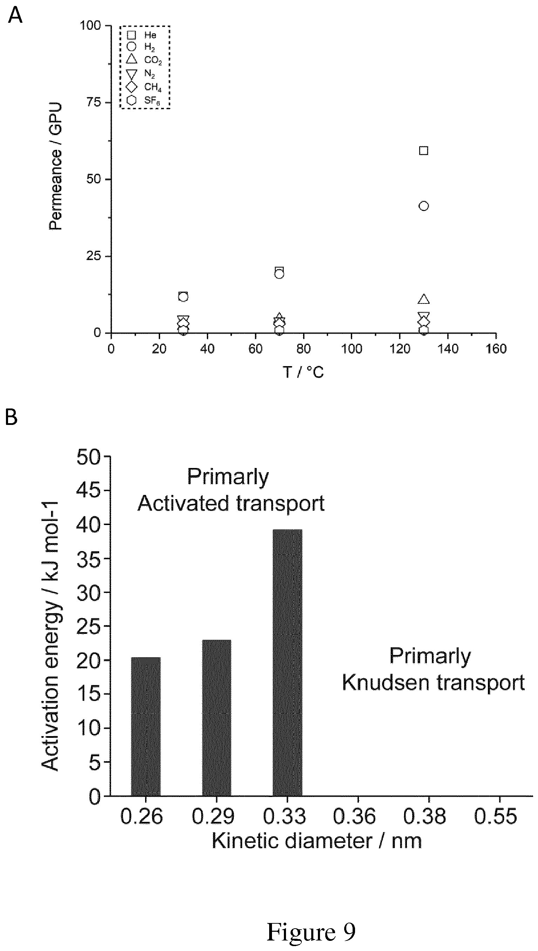

**Figure 9** shows the gas permeation ability of PTI films of the invention as measured by a pre-calibrated gas permeation setup with an on line mass spectrometer as described in Example 4. **A:** Gas permeance for 6 different gases as a function of temperature from a pure PTI film; **B:** Activation energies for gases as a function of kinetic diameter from a PTI film.

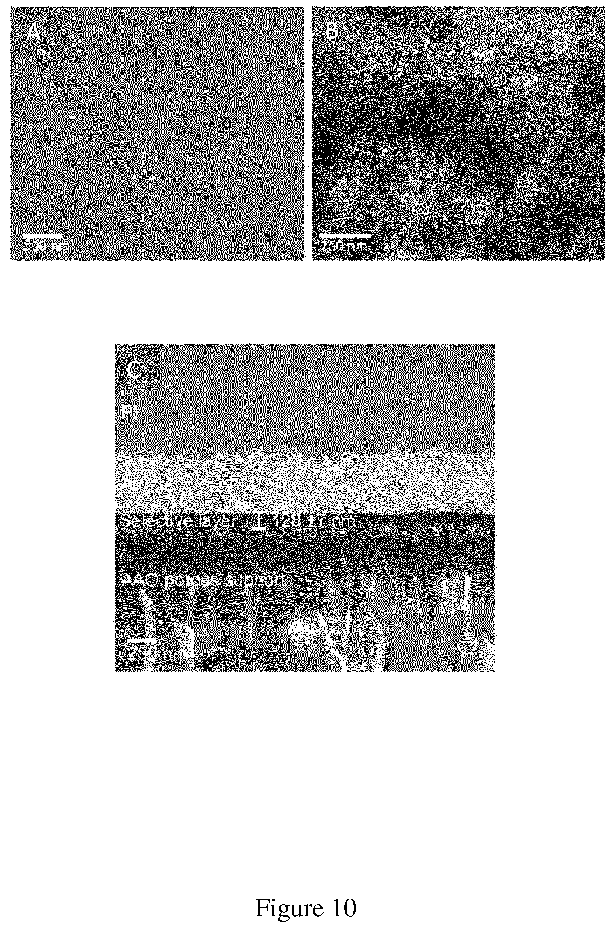

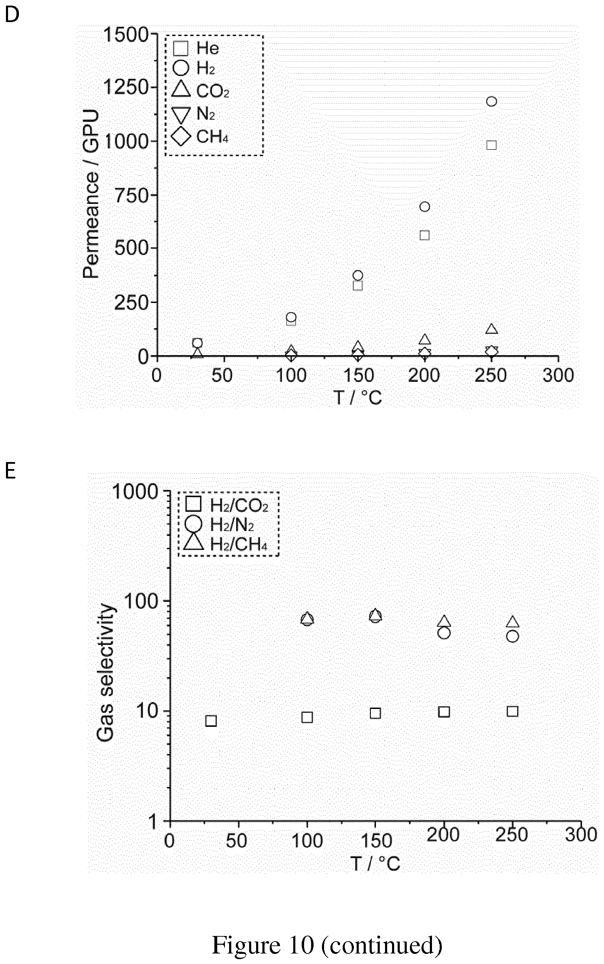

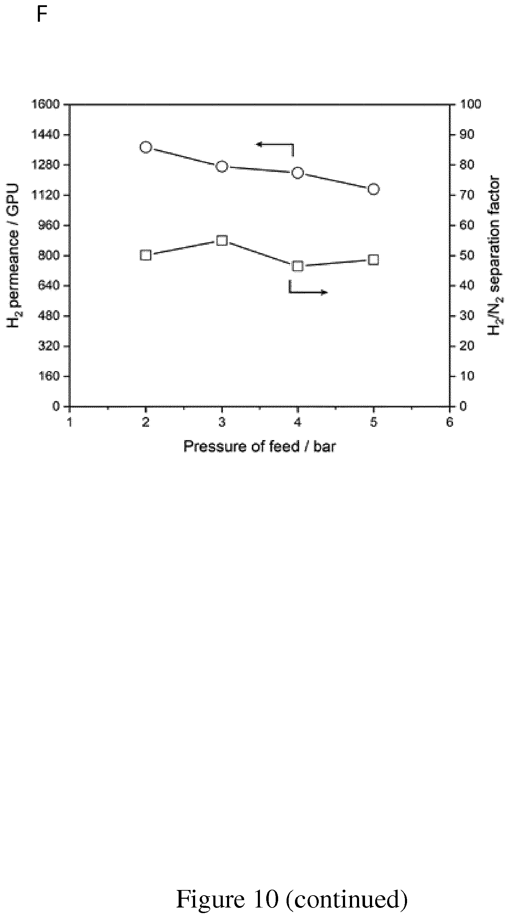

**Figure 10** characterizes composite PTI membranes incorporating m-PBI chains as spacers as described in Example 4. **A:** SEM image of the supported PTI membrane; **B**: Bright-field TEM image of a corresponding free-standing PTI membrane; **C:** SEM of a cross-section of the membrane revealing a 128 nm thick selective layer; **D:** Permeance of He, $H_2$, $CO_2$, $N_2$ and $CH_4$ as a function of temperature and **E:** corresponding $H_2/CH_4$, $H_2/N_2$ and $H_2/CO_2$ ideal selectivities; **F:** mixed-gas performance of at 250 °C and $H_2$ permeance and $H_2/N_2$ separation factor as a function of the pressure used in the feed side for a feed composition of 50:50 $H_2$:$N_2$ and a temperature of 250 °C.

## Detailed description of embodiments of the invention

The expression "nanosheet" refers to a two-dimensional nanostructure with thickness in a scale ranging from about 0.35 to about 10 nm. Typically, a PTI nanosheet according to the invention has a thickness of about 0.35 to about 3 nm with an average thickness of 0.77 nm.

The expression "layer spacing agent" is an agent able to separate two PTI layers. Examples of layer spacing agents suitable in the context of the present invention include agents that can interact with PTI layers for maintaining interlayer spacing during the membrane formation and theby allowing the the PTI layers to adopt an essentially paralel orientation within the formed membrane. Examples of PTI layer spacing agent include polybenzimidazole (m-PBI).

Referring to the figures, in particular first to **Figure 1,** is provided an illustration of a method for the preparation of a crystalline poly(triazine imide) (PTI) layered material under ambient pressure or slightly under or slightly over ambient pressure according to an embodiment of the invention. The illustrated method generally comprises the steps of:

**a1)** providing a carbon nitride precursor at the bottom of a reaction container;

**a2)** covering the surface of the carbon nitride precursor facing the opening of the reaction container with a layer comprising a Li-based salt;

a3) heating the reaction container to the synthesis temperature and maintaining the synthesis temperature until the synthesis is complete, wherein the said synthesis temperature is at or above the fusion temperature of the Li-based salt;

**b1)** cooling the reaction container to a temperature lower than the fusion temperature of the Li-based salt (e.g. to room temperature);

**c1)** removing the salt mixture;

**d1)** drying the obtained product in the form of crystalline poly(triazine imide) (PTI) layered material.

In an advantageous embodiment, the product obtained under step **d1)** is used in combination with a carbon nitride precursor (e.g. as a mixture) under step **a1)** in a further cycle of synthesis.

In an advantageous embodiment, method for the preparation of a crystalline poly(triazine imide) (PTI) layered material is carried out at ambient pressure.

In an advantageous embodiment, the reaction container comprises a bottom wall and a side wall upstanding from and surrounding the bottom wall, said Li-based salt sealingly contacts said side wall in a molten state.

In an advantageous embodiment, the side wall of the reaction container comprises an outwardly tapered shape extending from the bottom wall, for instance a conically tapered shape.

In an advantageous embodiment, the container is made of a ceramic material.

In another advantageous embodiment, the Li-based salt is provided in a solid form, placed over a layer of said carbon nitride precursor in the reaction container, and subsequently heated to melt the salt mixture.

In another advantageous embodiment, the Li-based salt is provided in the form of a powder.

In another further advantageous embodiment, the Li-based salt powder is compacted over the carbon nitride precursor.

In another further advantageous embodiment, the carbon nitride precursor is provided as a solid layer of material.

According to a particular embodiment, the carbon nitride precursor is selected from melamine, dicyandiamide, cyanamide, urea and ammonium dicyanamide.

According to a further particular embodiment, the carbon nitride precursor is melanine.

According to another particular embodiment, the layer comprising a Li-based salt is a layer comprising a Li-based eutectic salt mixture. According to a particular embodiment, the use of an eutectic salt mixture allows crystallization at lower temperature.

According to a further particular embodiment, the Li-based eutectic salt mixture is selected from a LiCl/KCl and a LiBr/KBr eutectic salt mixture.

According to a further particular embodiment, the Li-based eutectic salt mixture is a LiCl/KCl eutectic salt mixture.

According to another particular embodiment, the eutectic salt mixture is added to cover the surface of the carbon nitride precursor and therefore the amount of the eutectic salt mixture would vary depending on the size and shape of the reaction container.

According to a further particular embodiment, the eutectic salt mixture in an amount such that the weight ratio salt to carbon nitride is at least 0.5:1, for example from at least 1:1 to about at least 5:1 such as for example from about 10:1 to about 25:1 (e.g. 24:1).

According to another particular embodiment, heating under step c) is conducted for from about 1 hour to about 50 hours, for example from about 1 hour to about 48 hours, typically from about 1 to 24 hours. According to a particular aspect, longer reaction times allow the obtaining of larger crystals.

According to a particular embodiment, the reaction container is placed in an oven to heat the reaction container and its contents.

According to another particular embodiment, the reaction temperature is at a temperature of about 500°C to about 650°C, depending on the fusion temperature of the Li-based salt layer used (e.g. 100°C/min ramp and maintained at 600°c for about 48 hours).

According to another particular embodiment, heating of the eutectic salt mixture is conducted under inert atmosphere (e.g. $N_2$).

According to another particular embodiment, cooling of the reaction medium is conducted at a rate of about 1 to about 50 °C/min (e.g. 10°C/min).

According to another particular embodiment, the removal of the salt is conducted by washing with hot water.

According to another particular embodiment, the drying of the washed product is conducted at about 120°C.

According to another particular embodiment, the drying of the washed product is conducted under vacuum.

According to another particular embodiment, the method for the preparation of a crystalline poly(triazine imide) (PTI) layered material according to the invention further comprises a step f) of combining the product obtained under step **e)** with a carbon nitride precursor (e.g. as a mixture, for example grinded together) and providing such as mixture as a starting material under step **a)** of a further cycle of synthesis **a)** to **e).**

According to another particular embodiment, the method for the preparation of a crystalline poly(triazine imide) (PTI) layered material according to the invention comprises 2 to about 5 cycles of steps **a)** to **e) (in particular a1 to d1)** wherein the product obtained under step **e)** of the preceding cycle is used in combination with a carbon nitride precursor as a starting material of step a) of the following cycle.

According to another particular embodiment, the mixture of the product obtained under step e) of the preceding cycle is used in combination with a carbon nitride precursor as a starting material of step **a)** of the following cycle in a ratio of about 2:1 to about 10:1, typically from 3:1 to about 6:1 (e.g. 5:1).

According to another particular embodiment, is provided a method for the preparation of highly crystalline atom-thick PTI nanosheets (layers) comprising the steps of:

**ia)** providing a crystalline poly(triazine imide) (PTI) layered material under anhydrous atmosphere;

**iia)** dispersing the said crystalline poly(triazine imide) (PTI) layered material into an aprotic solvent (in particular a polar and aprotic solvent) under heating and stirring;

**iiia)** collecting the atom-thick PTI exfoliated layers from the supernatant.

According to a further particular embodiment, the aprotic solvent is selected from dimethylsulfoxide (DMSO) and dimethylacetamide (DMAc).

According to another further another particular embodiment, the aprotic solvent used to disperse crystalline poly(triazine imide) (PTI) layered material under step **iia)** before exfoliation is DMAc.

According to another particular embodiment, the heating step under **iia)** is at about 60 to about 150 °C (e.g. 100°C).

According to another particular embodiment, the exfoliated layers are collected from the supernatant by centrifugation in order to let the non-exfoliated material to settle.

Alternatively, the exfoliated layers are collected from the supernatant by gel electrophoresis.

According to a further another particular embodiment, the stirring step under **iia)** is carried out at about 200 to about 1000 rpm for about 6 to about 400 hours (e.g. from about 6 to about 24 hours).

According to a further another particular embodiment, the obtained PTI exfoliated layers have a porosity greater than 50%, containing ca. $1.55 \times 10^{14}$ pores/cm$^2$.

According to another particular embodiment, is provided a method for the preparation of a gas selective PTI membrane comprising the steps of:

> **ib)** providing a dispersion of crystalline poly(triazine imide) (PTI) PTI exfoliated layers in a solvent;
>
> **iib)** contacting a filter support with pore opening of 1-100 nm for retaining the PTI exfoliated layers (e.g. < 100 nm) and allowing gas flow (e.g. > 5 nm) with the solution under **ib)** and applying a pressure difference across said filter support to filter the PTI exfoliated layers dispersion;
>
> **iiic)** obtaining a gas selective PTI membrane.

According to another particular embodiment, is provided a method for the preparation of a gas selective PTI membrane wherein the solvent used to disperse the exfoliated crystalline poly(triazine imide) (PTI) layers before deposition of the solution on a support is an aprotic solvent.

According to another particular embodiment, is provided a method for the preparation of a gas selective PTI membrane wherein the crystalline poly(triazine imide) (PTI) PTI exfoliated layers used under step **ib)** are obtain under **iiia)** of a method of exfoliation according to the invention.

According to another particular embodiment, is provided a method for the preparation of a gas selective PTI membrane wherein the pressure difference applied under step **iib)** for the deposition of the solution on a support is selected from about 0.05 and about 100 bar, more particularly from about 0.1 to 10 bar.

According to another particular embodiment, is provided a method for the preparation of a gas selective PTI membrane wherein a layer spacing agent is added to the suspension of exfoliated crystalline poly(triazine imide) (PTI) layers under step **ib)**.

According to another particular embodiment, is provided a method for the preparation of a gas selective PTI membrane wherein poylbenzimidazole (m-PBI) is added to the solution of exfoliated crystalline poly(triazine imide) (PTI) layers under step **ib)**.

According to another particular embodiment, is provided a gas selective filter comprising a PTI membrane having a thickness of about 100 to 1'000 nm composed of exfoliated crystalline PTI layers and a porous support structure on which the PTI membrane is mechanically supported.

According to a particular embodiment, the $H_2$ permeance of the PTI membrane of the invention is from about $10^{-8}$ mol m$^{-2}$ s$^{-1}$ Pa$^{-1}$ to about $10^{-7}$ mol m$^{-2}$ s$^{-1}$ Pa$^{-1}$ (e.g. 5 x $10^{-7}$ at 250 °C).

According to a particular embodiment, a filter support is a polymeric or an inorganic support, typically supports used for nanofiltration such alpha-alumina.

According to a particular aspect, a method of the invention advantageously provides a scalable and safe ambient-pressure synthesis route leading to several grams of layered PTI platelets in a single batch with a yield of at least 70% yield with respect to the precursor.

According to another particular aspect, a method of the invention further advantageously provides a method for the preparation of atom-thick PTI nanosheets with a high yield.

According to another particular aspect, a method and PTI nanosheets of the invention further advantageously provides useful starting materials for the preparation of membranes suitable for He and $H_2$ from larger molecules with a high efficiency at high temperature where a $H_2$ permeance reaching 1'500 gas permeation units with $H_2/CO_2$, $H_2/N_2$, and $H_2/CH_4$ selectivities reaching 10, 50, and 60, respectively, at 250 °C. Finally, thin membranes are prepared which could separate $H_2$ from $CO_2$, $N_2$ and $CH_4$ reaching a high hydrogen permeance of 1'500 gas permeation units (GPU, 1 GPU = $3.35 \times 10^{-10}$ mol m$^{-2}$ s$^{-1}$ Pa$^{-1}$) at 250 °C.

In comparison, the state-of-the-art membranes for hydrogen sieving at high temperature are based on rigid polymers such as polybenzimidazole (PBI) (Swihart et al., 2017, Energy Environ. Sci. 00, 1-3; Pesiri et al., 2003, J. Memb. Sci. 218, 11-18), zeolites (Choi et al., 2010, J. Am. Chem. Soc. 132, 448-449; Ramasubramanian et al., 2013, AIChE J. 59, 1033-1045, Wang et al., 2014, J. Memb. Sci. 450, 425-432); amorphous silica (Kanezashi et al., 2010, in Advances in Bioceramics and Porous Ceramics II (John Wiley & Sons, Ltd, https://ceramics.onlinelibrary.wiley.com/doi/abs/10.1002/9780470584354.ch21), 229-239 ; Brinker et al., 1994, MRS Proc. 368, 329) and dense Pd films.(31-33). PBI membranes yield low $H_2$ permeance while the Pd-based membrane suffer from stability issue in the presence of contaminants ($H_2S$, CO, hydrocarbons). The silica and zeolite-based membranes show attractive performance for $H_2$ sieving, however, they involve a complex synthesis and activation process (Gascon et al., 2012, Chem. Mater. 24, 2829-2844).

The method and PTI membranes of the invention therefore represent a very appealing technology since they allow an easy processing for the obtaining of gas sieving membranes with a short diffusion path for molecules with a high degree of molecular sieving pores which can withstand harsh chemical conditions (acids, bases and high temperatures). For instance, there is a need for improving the performances of membranes used in high-temperature $H_2$ purification from streams containing $CO_2$, $N_2$ and $CH_4$, in particular increasing the $H_2$ permeance (transmembrane pressure normalized flux) and selectivity in view of improving the energy-efficiency of the industrial processes that generate and consume $H_2$. Examples for such a need include $H_2/CO_2$ and $H_2/N_2$ separation processed from the product of steam reforming of hydrocarbons, purging $CH_4$ and Ar from the recycle stream in ammonia synthesis, recovery of $H_2$ from the industrial off-gas, etc (Sholl et al., 2016, Nature. 532, 435-437; Zolandz et al., 1992, in Membrane Handbook, W. S. W. Ho, K. K. Sirkar, Eds. (Springer US, Boston, MA, 1992; https://doi.org/10.1007/978-1-4615-3548-5_5), pp. 78-94; Winterhalder et al., 2017, Sep. Purif. Technol., 189, 433-440; Sunarso et al., 2017, Sep. Purif. Technol. 176, 335-383).

The invention having been described, the following examples are presented by way of illustration, and not limitation.

## EXAMPLES

**Example 1: Method of preparation of crystalline PTI platelets**

A method of the invention for the preparation of crystalline PTI was illustrated as follows.

Inside an Ar-filled glove box, 22.65 g of LiCl (Sigma Aldrich) and 27.35 g of KCl (Sigma Aldrich) were mixed and grinded to make an eutectic salt mix.

*a1) Providing the PTI precursor at the bottom of a reaction container*

A 15 ml porcelain crucible (Morgan Advanced Materials) was filled with 0.5 g of melamine (Sigma Aldrich) as precursor in the bottom of the crucible.

*a2) Covering the precursor with an eutectic salt mixture*

The melamine was then covered completely with a layer of 12 g of the eutectic salt mix obtained above without mixing.

*a3) Heating the reaction container for obtaining a molten salt layer and cooling to room temperature*

The crucible was covered with a porcelain cap and transferred to a quartz-tube furnace with an internal diameter of 120 mm (MTI Corporation, Richmond, CA). The crucible was heated to 600 °C (10 °C/min) under 2 L/min $N_2$ flow and maintained at 600 °C for a certain amount of time (from about 1 hour to about 30 days, e.g. from about 1 hour to about 24 hours).

*b1) Cooling the reaction container*

The crucible was then cooled down to room temperature (10 °C/min).

*c1) Washing off the salt mix*

The obtained mixture was then washed with hot water at least three times to remove the salt mix completely.

*d1) Washing off the salt mix*

The obtained product is then dried at 120 °C under *vacuum.*

*e1) Restarting the synthesis cycle*

A second synthesis cycle was carried out to increase the size of PTI crystals was done in the same way but instead of putting just melamine at the bottom, a mixture of 0.1g PTI powder from the first cycle and 0.5 g of melamine were grinded together and used at the bottom of the reaction container under a layer of eutectic salt mix under step b).

It has been observed that reaction times as short as one hour can produce crystalline PTI but with smaller crystals. Such small PTI crystals are attractive for applications like catalysis. Longer reaction times allow the formation of larger crystals which are useful for the preparation of membranes. For example, after step d), the average crystal size was about 35 nm and after step e1) was 95 nm for the same set of parameters (amount of precursor, size of the container etc..). The protocol reported by *Wirnhier et al., 2011, supra* was used for the synthesis inside a vacuum-sealed quartz ampule for comparative PTI.

The material resulting from step f) (70% yield w.r.t. melamine) exhibited crystallinity similar to PTI synthesized using an ampule containing well-mixed reactants under *vacuum* (**Fig. 2**). The interlayer spacing indicated by the (002) peak was 3.36 Å similar to graphitic materials. Elemental analysis summarized under Table 1 below shows that the composition of PTI was close to the theoretical composition for both synthesis approaches.

**Table 1**

| Sample | C (wt%) | N (wt%) | H (wt%) | C/N/H | C/N | H/N |
|---|---|---|---|---|---|---|
| Synthesized inside quartz ampule under *vacuum* (comparative) | 28.65 | 50.50 | 1.27 | $C_3N_{4.5}H_{1.6}$ | 0.66 | 0.35 |
| One synthesis cycle Of the invention (2 days) | 28.92 | 50.75 | 1.64 | $C_3N_{4.5}H_2$ | 0.66 | 0.45 |
| Two synthesis cycles of the invention (2 days and 6 days) | 28.95 | 52.10 | 1.28 | $C_3N_{4.6}H_{1.6}$ | 0.65 | 0.34 |
| Theoretical composition of PTI | 29.59 | 51.76 | 1.24 | $C_3N_{4.5}H_{1.5}$ | 0.67 | 0.34 |

The as-synthesized PTI material resulting from **step e)** was plate-shaped, hexagonal prismatic crystal with an average lateral size of 33 nm (SD=21 nm, **Fig. 3A**). The lateral size of the layered platelets could be increased to 95 nm (SD=60 nm) by using the as-synthesized platelets as seeds in step a) of the re-synthesis (**Fig. 3B**). Repeating the growth cycles (**Fig. 3 C, D**) proved to be much more effective compared to increasing the growth time for increasing the platelet size (**Fig. 3E-H**). High-resolution transmission electron microscopy (HRTEM) image of a platelet revealed the uniform honeycomb-like pore channel in the layered sheets which exists because of the AB stacking of the sheets (**Fig. 4A**). The PTI crystals are made of PTI layers that do not pack in the same orientation on top of each other. The fact that the triangular pores of different layers are not aligned give rise to "hexagonal" channels when one observe the crystal from the top as schematized under **Fig. 4C**. Consistent with XRD data, the platelets were highly crystalline (**Fig. 4B**) and lattice fringes were visible throughout the platelets. No amorphous domain was detected. HRTEM was performed using either a double Cs-corrected Titan Themis 60-300 (FEI) or a Talos F200X at 80 kV. The filtered images were obtained by applying an adaptive Wiener and a radial difference filters.

*Characterizations*

TEM imaging (bright-field mode) and electron diffraction analysis of the PTI crystals, membranes and membranes were conducted using a FEI Tecnai G2 Spirit Twin with 120 keV incident electron beam energy. Free-standing PTI membrane samples for TEM imaging were prepared by etching the Anopore support in NaOH 1M, transferring the floating PTI film to a fresh water bath and picking it up with a 400-mesh copper TEM grid. Thinner PTI films (ca. 200 nm) were used for TEM imaging. HRTEM was performed using either a double Cs-corrected Titan Themis 60-300 (FEI) or a Talos F200X at 80 kV. The filtered images were obtained by applying an adaptive Wiener and a radial difference filters. XRD measurements were performed in a Bruker D8 Discover X-ray diffractometer equipped with a laser alignment system. Free-standing PTI layers were transferred to a Si low background sample holder in order to perform the XRD measurements.

Overall, those data support that confining the precursor below a salt layer was sufficient to maintain the needed concentration of partially condensed yet volatile intermediate precursors (e.g. melam) for the synthesis of crystalline PTI according to the invention. It is observed that the salt layer remained separated from the precursor/PTI layer until the end of the reaction (**Fig. 1A**).

The same protocol used for preparing small batches (0.5 g of melamine, 15 ml crucible) was used to prepare larger batches using a 250 ml crucible (Fisher Scientific) and 8.3 g of melamine. The melamine to salt weight ratio was kept the same as for the small batches (e.g. 1 to 24).The same heating and purification protocols were used as well. The resulting material was as crystalline as when the synthesis was done in small batches proving the scalability of the proposed ambient pressure synthesis approach for crystalline PTI. The yield was the same as for the small batches (i.e., 70% w.r.t. melamine).

Therefore, it supports that the method of the invention would be scalable as it allows obtaining large batches of crystalline PTI with a high yield without the need of specific equipment for ensuring safe reaction conditions.

**Example 2: Exfoliation of PTI platelets**

PTI crystals obtained by a method of the invention as described under Example 1, i.e. with two cycles, 2 cycles, the first one of 2 days and second of 6 days were exfoliated as follows:

Inside an Ar-filled glove box, 100 mg of PTI were put inside a glass vial containing 100 ml of anhydrous DMAc (Fluorochem). The solution was heated to 100 °C and stirred at 500 RPM for 2 days.

*Characterizations*

SEM was carried out to observe the surface and cross section of PTI membranes using FEI Teneo scanning electron microscope with voltages of 1-3 kV. All the samples except for the surface images of the PTI membranes with polybenzimidazole (PBI) chains as spacers were directly characterized without conductive coating. A ~3 nm thick Ir coating was used for imaging the surface of the PTI membranes with polybenzimidazole (PBI) chains as spacers. The cross section was prepared using focused ion beam (FIB) milling. The sample was coated with a 200 nm protective layer of gold (Q150T Plus, Quorumtech) before using a XB 540 CrossBeam FIB-SEM (Zeiss) to deposit a 1 $\mu$m thick platinum layer. The sample was tilted to 54° and a trapezoidal area with 60 and 32 $\mu$m for the two bases and a height of 15 $\mu$m was milled using 30 kV and 7 nA with a final cutting depth of 10 $\mu$m. The trapezoid was milled 3 $\mu$m below the deposited platinum. Subsequent cuts were made using a lower current and slowly approaching the deposited platinum. The final cut was carried out using 30 kV and 100 pA.

AFM measurements were done on a Nanoscope IIIa (Veeco, Santa Barabara, CA, USA) operated in the tapping-mode with Nanosensors PPP-NCSTR probes. Data processing was performed using the Gwydion software. Images were flattened before measuring the height of the membranes. The height measurements were well fitted to a log-normal distribution function and such distribution was used to calculate the mean height of the PTI membranes. Samples were prepared by spin-coating a drop of the suspension of PTI membranes in DMAc on the surface of a freshly cleaved mica, which was placed afterwards in a vacuum oven at 50 °C for 3 days.

XPS analysis was performed on a VersaProbe II (Physical Electronics) using the monochromated K$\alpha$ X-ray line of an aluminum anode (1486.6 eV). The samples for XPS were prepared by filtering a suspension of PTI membranes through an Anopore membrane (pore size 20 nm) and drying the resulting Anopore membrane with a layer of PTI membranes on its surface at 150 °C under vacuum for 3 days to remove all the solvent.

With two days of stirring, the color of the solution changed from yellow to which was also followed by bright field TEM as shown under **Fig. 5A-C**. Finally, the resulting solution was purified by 3 centrifugation steps of 10 minutes each at 5'000, 10'000, and 15'000 g, respectively, to obtain in the supernatant predominantly single and few-layers PTI membranes.

It was possible to already observe exfoliated membranes after 6 hours. The resulting suspension consisted of a large population of the exfoliated membranes which were then purified by centrifugation (**Fig. 5D**). The exfoliation produced a solution with a concentration of 0.14 $\pm$ 0.06 mg/ml. The selected area electron diffraction (SAED) pattern of the PTI membranes was consistent with the expected hexagonal symmetry of a PTI layer (inset of **Fig. 5D**). An atomic force microscopy (AFM) study revealed a mean height of 0.77 nm with majority of membranes being single-layer (Fig. **5E-F**). Generally, the single-layer nanosheets were smaller in the lateral size. HRTEM images confirmed the presence of single-layer PTI where the characteristic triangular porous structure of PTI was observed (**Fig. 5G, H**). The few-layer nanosheets showed the expected honeycomb pattern formed by the AB stacking of the layers (**Fig. 5I, J**).

X-ray photoelectron spectroscopy (XPS) measurements on a film made of exfoliated crystalline PTI layers as described above after a mild centrifugation-based purification (5'000 g for 10 min, 10'000 g for 10 min, 15'000 g for 10 min) revealed reduced $Li^+$ and $Cl^-$ concentration of 2.8 and 0.2 at. %, respectively, compared to 5 at.% (for both) in the non-exfoliated layered PTI platelets (**Fig. 6A, B**). Reducing the content of $Li^+$ and $Cl^-$ in the nanosheets improves the number of available pores for gas transport (i.e., pores without ions blocking the available space for the transport of gas molecules).

**Table 2**

| Purification protocol for exfoliated nanosheets | Type of nanosheet | Li content (atomic %) | Cl content (atomic %) |
|---|---|---|---|
| Not applicable | As-synthesized PTI crystals | 5 | 5 |
| I | Exfoliated. Centrifugation protocol as following: 5'000 g for 10 min, 10'000 g for 10 min, 15'000 g for 10 min | 2.8 | 0.2 |
| II | Exfoliated. Centrifugation protocol as following: 5'000 g for 10 min, 10'000 g for 10 min, 15'000 g for 3 hours | below detection limit | 0.5 |

The concentration of single-layer sheets could be further improved by an extended centrifugation-based purification (5'000 g for 10 min, 10'000 g for 10 min, 15'000 g for 3 hours). In this case, $Li^+$ was not detected by XPS (**Fig. 6C**, **D**). $Li^+$ and $Cl^-$ reside in the nanopore and the gallery, respectively, and should therefore be more accessible for exchange upon exfoliation *(Schwinghammer et al., 2014, supra;* McDermott et al., 2013, J. Phys. Chem. C. 117, 8806-8812).

The nanosheet dispersion obtained after stirring the PTI crystals in anhydrous DMAc for 2 days was stable for several months indicating a similar surface energy between DMAc and PTI.

Interaction between Li+ located in the PTI layers and DMAc seem to play an important role in exfoliation. The carbonyl oxygen of DMAc interacts strongly with Li+ and can form very stable complexes, potentially weakening the interlayer interaction. Exfoliation was not observed when anhydrous DMAc was not used.

Overall, the exfoliation method using stirring in an aprotic solvent according to the invention applied to PTI platelets is facile leading to primarily single PTI layers with an average thickness of 0.77 nm.

**Example 3: Simulating the potential of PTI membranes for molecular separations**

*Ab-initio* simulations were conducted to investigate the potential of PTI membranes for molecular separation as follows.

Density functional theory (DFT) calculations were performed to optimize the structure of single-layer PTI, to calculate the energy barrier of gas molecules passing through the triangular nanopores of single-layer PTI, and to describe the electron density isosurfaces of the nanopore. The DFT calculations were performed using the Quantum Espresso package (Giannozzi et al., 2009, J. Phys. Condens. Matter., 21, 395502*).* Perdew-Burke-Ernzerhof (PBE) approximation (Perdew, et al., 1996, Phys. Rev. Lett., 77, 3865-3868*)* was used for the exchange-correlation energy functional. The semiempirical van der Waals (VdW) correction according to Grimme et al., 2010, J. Chem. Phys., 132, 154104 was employed. Ultrasoft scalar-relativistic pseudopotentials from the SSSP efficiency library (Prandini et al., 2018,. npj Comput. Mater., 4, 72) were used. The electron wave functions were expanded in plane waves up to an energy cutoff of 60 Ry and a charge density cutoff of 480 Ry. Integration over the Brillouin zone was carried out with a uniform 12x12x1 k-point grids (Monkhorst, 1976, Phys. Rev. B., 13, 5188-5192). A vacuum region of 40 Å was employed in the z direction to avoid interactions among the periodic replica. The monolayer geometry has been optimized with a threshold of $10^{-4}$ Ry/a.u. on the forces and 0.05 kbar on the in-plane pressure resulting in a theoretical equilibrium lattice parameter of a=8.645 Å. To investigate the potential energy surface of the chosen gases (i.e., He, $H_2$, $N_2$, and $CH_4$), calculations were performed using 2x2 supercells to eliminate spurious interactions between the molecules.

To study the adsorption behavior of gas molecules on the porous PTI monolayer, a constrained relaxation was carried out. The gas molecule was put at different distances from the sheet and the mass center of the molecule was fixed in the z direction (perpendicular to the n2d membrane). The molecule had the freedom to relax in other directions to find the optimum energy value in each configuration while the PTI geometry was fixed. The effects of this approximation have been checked in a 1x1 cell where it brings significant changes (i.e., 0.18 eV in the barrier height) only in the PTI-$CH_4$ case when the hydrogens of $CH_4$ are at a minimum distance from the PTI hydrogens. For the rest of the molecules and the other $CH_4$ configuration it brings negligible changes. The minimum energy surface for different gas molecules passing through the PTI monolayer was explored using interaction energies between gas molecules and the PTI film. The interaction energies between gas molecules and the PTI monolayer were computed by Equation (1):

$$E_{int} = E_{gas+PTI} - E_{gas(far\ from\ the\ PTI\ membrane)} \quad (1)$$

where $E_{gas+PTI}$ is the total energy of gas molecules and the PTI monolayer, and $E_{gas(far\ from\ the\ PTI\ membrane)}$ is the energy of molecule and the energy of the PTI monolayer when they do not interact with each other. Due to the strong cohesive force among atoms in the PTI monolayer, it was assumed that the positions of these atoms are fixed during the simulations. For methane molecules, geometry optimization during the calculations is extremely important because it has a tetrahedral molecular geometry. $CH_4$ needs to overcome a large energy barrier when its hydrogen atoms are aligned with the hydrogen atoms at the edge of the pore of the PTI membrane (**Fig. 7C**). On the other hand, it is easily adsorbed when it rotates 60° to avoid the hydrogen atoms from PTI (**Fig. 7D**). In fact, DFT calculations of the interaction of He, $H_2$, $N_2$ and $CH_4$ with single-layer PTI sheets indicate that the triangular-shaped nanopores of PTI are attractive for the purification of $H_2$ from $N_2$ and $CH_4$ (**Fig. 7A-E**). **Fig. 7E** shows the potential energy profile for two configurations of methane. It is evident that methane molecules can cross PTI nanopore in only a few of all its possible configurations, $H_2$ and He can freely diffuse across the nanopore, attributing to their small size and $N_2$ when it orients itself such that the two nitrogen atoms are positioned perpendicular to the pore, does not experience a repulsion at the center of the pore (**Fig. 7B**). However, the interaction energy of $N_2$ at the pore center is much lower than that at the absorbed state above the pore. As a result, it requires an activation energy of 0.145 eV to diffuse the nanopores. Therefore, PTI nanopores are expected to be hydrogen selective.

**Example 4: Evaluating the potential of PTI nanosheets for molecular separations**

To understand the sieving capability of the PTI nanopores, the exfoliated PTI nanosheets were compacted in a 900-nm-thick film by *vacuum* filtration as follows (in order to obtain a continuous film without defects, approximate 2500 PTI nanosheets were packed on top of each other):
A coating suspension was prepared by diluting the solution obtained after exfoliation and purification, as described under Example 2 containing a PTI nanosheets concentration of 0.14 ± 0.06 mg/ml, with more DMAc; sonicate it for 5 minutes in a bath sonicator (MTI Corporation, Richmond, CA); centrifuge it for 10 minutes at 10000 g; and using the top 13 ml of the supernatant (mostly containing monolayers and few-layered material). The volume of concentrated PTI nanosheets solution used for pure PTI membranes was 2 ml and for PTI membranes with m-PBI chains (see preparation below) as spacers was 1 ml.

Anopore (i.e. Aluminum Oxide) membranes (pore size 20 nm, diameter 13 mm, Smart Membranes, Halle, Germany) used as filter support. The Anopore support was assembled in a filtration set up and 15 ml of the dispersion containing the PTI nanosheets in DMAc were filtered through it using a slight vacuum (0.05-0.2 bar). The PTI nansoheets are retained by the Anopore support and they pack on top of each other to form a continuous PTI film. As can be seen on **Fig. 8B-E**, the films were composed of well-packed monolayers, c-out-of-plane oriented and overlapping crystalline PTI nanosheets. Bright-field TEM imaging of a free-standing film did not reveal any obvious packing defects, while SAED confirmed that the nanosheets in the packed film were crystalline. The broad peak XRD at 26.3-28.3° (**Fig. 8F**) revealed by corresponds to an interlayer d-spacing of 0.32-0.34 nm.

The molecular-sieving performance of PTI membranes was proved using a homemade permeation setup described in detail in He et al., 2018, Adv. Funct. Mater., 28, 1707427. The absolute pressure difference for all measurements was 1 bar to minimize possible back diffusion of the sweep gas.

The pressure on the feed was maintained at 2 bar and on the permeate side at 1 bar during the measurements unless otherwise specified. All measurements were done after reaching steady-state and using argon as the sweep gas. The membranes were sealed with epoxy on a stainless steel annular disk. GC Potting Epoxy from GC Electronics was used for testing up to 150°C and Scotch-weld DP760 from 3M was used for testing at higher temperatures. The composition of the permeate was analyzed using a Hiden Analytical HPR-20 mass-spectrometer. The membrane cell along with the feed and sweep gas lines were heated inside a convection oven to control the temperature of the measurement. The permeances, J$i$, of gas i were calculated by Equation **(2)**:

$$ J_i = X_i/(A \cdot \Delta P_i) \quad (2) $$

where X$i$ is the molar flow rate of component *i* across the membrane area (A), and ΔP$i$ is the transmembrane pressure difference for the component *i*. The ideal selectivity $\alpha ij$ of two gases (*i* and *j*, where *i* is the faster permeating gas) was calculated by Equation **(3)**:

$$ \alpha_{ij} = J_i/J_j \quad (3). $$

The permeance of gas molecules through the nanopores of PTI in the assembled membranes can be related to the activation energy for transport if the transport is temperature activated (Equation **(4)**):

$$ Gas\ permeance \propto Ae^{(-\frac{E_{act}+E_{sur}}{RT})} (4) $$

where $A$ is the pre-exponential factor, $E_{act}$ is the activation energy to translocate the pores, $E_{sur}$ is the energy of adsorption on the PTI pore, R is the universal gas constant, and T is the operation temperature.

By linear fitting of *In*(permeance) and 1/T, the apparent activation energy $E_{app} = E_{act} + E_{sur}$ can be obtained. Based on the ab-initio simulations performed $E_{He,sur}$ = -4 kJ/mol, $E_{H_2,sur}$ = -10 kJ/mol, and $E_{CO_2,sur}$ = -23 kJ/mol. The $E_{act}$ for each of the gases can be calculated by the equation $E_{act} = E_{app} - E_{sur}$

It as was observed that the transport of gas molecules with kinetic diameter up to 0.33 nm (He, 0.26 nm; H$_2$, 0.29 nm; CO$_2$, 0.33 nm) was in the temperature-activated regime (**Fig. 9A**), with the activation energy increasing with the molecular size (activation energies of 20, 23, and 39 kJ mol$^{-1}$ for He, $H_2$, and $CO_2$, respectively, **Fig. 9B**). The permeance of larger molecules ($N_2$, $CH_4$ and $SF_6$ with kinetic diameters of 0.36, 0.38, and 0.55 nm, respectively) did not increase with temperature, confirming that their transport took place solely through the packing defects. A tortuous gas transport through intersheet gallery spacing is not expected as a d-spacing of 0.32-0.34 nm was observed in the packed films (**Fig. 8F**), corresponding to an impermeable gap of ca. 0.10 nm between the layers. As a result, $H_2/N_2$ and $H_2/CH_4$ selectivities (7.5 and 11.7, respectively) were considerably greater than the corresponding Knudsen selectivities (3.7 and 2.8, respectively).

The activated transport of hydrogen observed from the stacked membrane film is in contrast to the DFT calculations on single-layer PTI, indicating that in the stacked films, the molecules experienced an additional resistance to diffuse. In fact, the gas permeance from self-assembled PTI films was lower than expected from films made with nanosheets containing >50% porosity. *Ab-initio* calculations show that small gases like He and $H_2$ can freely transport across single-layer PTI sheets. The observed low permeance is likely due to the low amount of interconnected pore channels, in the packed film, that are large enough to allow the transport of gas molecules. PTI nanosheets pack very well with an interlayer spacing that is too small (d-spacing of 0.32-0.34 nm, **Fig. 8F**) to allow molecules to transport through the gaps between the sheets. Any misalignment in the stacking of the nanosheets will cause the partial or complete blocking of transport channels. Moreover, ions retained in PTI nanosheets, particularly in bi-layer and few-layer nanosheets, can block the transport pathways. A 900 nm thick PTI film is formed by stacking more than 2500 PTI nanosheets, and it takes only a few multilayer PTI nanosheets hosting ions or a few heavily misaligned nanosheets to block transport pathways. Therefore, partial or complete blocking of a number of transport channels in the PTI film as a result of non-aligned nanosheet stacking or from residual Li$^+$ ion in the vicinity of some nanopores might occur.

Nonetheless, the transport study from stacked PTI nanosheets confirmed that the PTI nanosheets can indeed sieve $H_2$ from $N_2$ and $CH_4$.

To overcome the nanopore-blockage by non-aligned stacking of nanosheets to some extent, modified polybenzimidazole (m-PBI) chains were used as spacers between the PTI nanosheets. In fact, adding a small amount of m-PBI (ca. 0.06 mg/ml) to the dispersion of PTI nanosheets did not cause agglomeration of the nanosheets which motivated trying to assemble them to form a composite structure in which m-PBI chains could act as a spacer to the packing of PTI nanosheets. Therefore, composite membranes were made by *vacuum* filtration as described above applied to a mixture comprising 15 ml of a solution containing ca. 0.06 mg/ml of m-PBI (PBI Performance Products Inc., NC, USA) and ca. 0.01 mg/ml of PTI nanosheets obtained as described above (PTI/m-PBI weight of 16/84). A conservative PTI loading (wt%) in the final membranes of 16 % was calculated assuming all the m-PBI molecules are retained during the filtration. Since *vacuum* filtration was used for the film fabrication, the concentration of PTI in the assembled film is expected to be much higher than 16% because most of the m-PBI chains should be filtered out. Scanning electron microscopy (SEM) image of films prepared in this manner indicated a uniform PTI coating on the support (**Fig. 10A**). Transmission electron microscopy (TEM) image of the film, transferred from the support to a TEM grid, confirmed a high packing density of PTI nanosheets (**Fig. 10B**). Importantly, owing to the filtration-based coating, the nanosheets appeared to orient *c*-out-of-plane, perpendicular to the gas transport pathway across the film. The thickness of the film was 128 $\pm$7 nm (**Fig. 10C**). The resulting membranes were defect-free and yielded a good performance (**Fig. 10D-F**).

Altogether, those data supports that the method of the invention allows a large-scale synthesis for PTI material and the preparation of single-layer PTI nanosheets therefrom which are desired for catalysis and molecular sieving applications. Further, those data support that the PTI material obtained by a method of the invention can be easily processed into highly selective membranes which are attractive for high-temperature hydrogen sieving, while they provide a significant manufacturing advantage compared to conventional high-performance hydrogen-sieving membranes.

**Claims**

1. **A method** for the preparation of a crystalline poly(triazine imide) (PTI) layered material comprising the steps of:

    **a)** placing a carbon nitride precursor in a reaction container such that the carbon nitride precursor presents an exposed surface;
    **b)** completely covering said exposed surface of said carbon nitride precursor with a Li-based salt;
    **c)** reacting said Li-based salt with said carbon nitride precursor at a temperature which is at or above the fusion temperature of the Li-based salt, at a pressure in the range of 0,8 to 1,2 bars, preferably at atmospheric pressure, for at least 1 hour;
    **d)** cooling and removing the Li-based salt;
    **e)** collecting said crystalline poly(triazine imide) (PTI) layered material.

2. The method of claim 1 wherein the reaction container comprises a bottom wall and a side wall upstanding from and surrounding the bottom wall, said Li-based salt sealingly contacts said side wall in a molten state.

3. The method of any preceding claim wherein the Li-based salt is provided in a solid form, placed over a layer of said carbon nitride precursor in the reaction container, and subsequently heated to melt the salt mixture.

4. The method of any preceding claim wherein the Li-based salt is provided in the form of a powder.

5. The method of any preceding claim wherein the Li-based salt is provided in the form of a eutectic salt mixture.

6. The method of the preceding claim wherein the powder is compacted over said carbon nitride precursor.

7. The method of any preceding claim wherein the carbon nitride precursor is provided as a solid layer of material.

8. The method of any preceding claim wherein the side wall of the reaction container comprises an outwardly tapered shape extending from the bottom wall, for instance a conically tapered shape.

9. The method of any preceding claim wherein the product obtained under step **e)** is used in combination with a carbon nitride precursor (e.g. as a mixture) under step **a)** in a further cycle of synthesis **a)** to **e)** to increase the lateral size of the crystals of the end product.

10. The method of any preceding claim wherein the carbon nitride precursor is selected from melamine, dicyandiamide, cyanamide, urea and ammonium dicyanamide.

11. The method of any preceding claim wherein the Li-based salt is selected from a LiCl/KCl and a LiBr/KBr eutectic salt mixture.

12. A method for the preparation of an atom-thick crystalline poly(triazine imide) (PTI) layer comprising the steps of:

    **ia)** providing a crystalline poly(triazine imide) (PTI) layered material under anhydrous atmosphere;
    **iia)** mixing said crystalline poly(triazine imide) (PTI) layered material into an aprotic solvent under heating and stirring;
    **iiia)** collecting the atom-thick PTI exfoliated layers.

13. A method for the preparation of a gas selective poly(triazine imide) (PTI) membrane comprising the steps of:

    **ib)** providing a mixture of crystalline PTI exfoliated layers in a solvent;
    **iib)** passing the mixture under ib) through a filter support;
    **iiic)** obtaining a gas selective PTI membrane.

14. Gas selective filter for separating $H_2$ and/or He from $CO_2$ or $N_2$ and from larger molecular weight hydrocarbons (e.g. $C_2H_4$) comprising an assembly of PTI layers.

15. Gas selective filter according to the preceding claim wherein the PTI layer is made with a method according to any of the preceding claims 1-13.

16. Use of a gas selective filter comprising an atom-thick PTI layer for separating $H_2$ and/or He from $CO_2$ or $N_2$ and from larger molecular weight hydrocarbons (e.g. $C_2H_4$).

Figure 1

Figure 2

Figure 3

Figure 3 (continued)

Figure 4

Figure 4 (continued)

Figure 5

Figure 5 (continued)

Figure 5 (continued)

Figure 6

A

Figure 7

B

C

D

Figure 7

E

Figure 7 (continued)

Figure 8

Figure 8

A

B

Figure 9

Figure 10

D

E

Figure 10 (continued)

F

Figure 10 (continued)

Europäisches
Patentamt

European
Patent Office

Office européen
des brevets

# EUROPEAN SEARCH REPORT

Application Number

EP 19 20 3932

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE COMPENDEX [Online] ENGINEERING INFORMATION, INC., NEW YORK, NY, US; 19 September 2008 (2008-09-19), BOJDYS M J ET AL: "Ionothermal synthesis of crystalline, condensed, graphitic carbon nitride", XP002798434, Database accession no. E20084311649743 * abstract * & CHEMISTRY - A EUROPEAN JOURNAL 20080919 WILEY-VCH VERLAG DE, vol. 14, no. 27, 19 September 2008 (2008-09-19), pages 8177-8182, DOI: 10.1002/CHEM.200800190 ----- | 1-11 | INV. C01B21/06 C01B21/082 B01D53/22 B01D67/00 B01D71/64 |
| A | DATABASE COMPENDEX [Online] ENGINEERING INFORMATION, INC., NEW YORK, NY, US; 5 February 2014 (2014-02-05), SCHWINGHAMMER K ET AL: "Crystalline carbon nitride nanosheets for improved visible-light hydrogen evolution", XP002798435, Database accession no. E20140817340970 * abstract * & JOURNAL OF THE AMERICAN CHEMICAL SOCIETY 20140205 AMERICAN CHEMICAL SOCIETY USA, vol. 136, no. 5, 5 February 2014 (2014-02-05), pages 1730-1733, DOI: 10.1021/JA411321S ----- | 1-11 | TECHNICAL FIELDS SEARCHED (IPC) C01B B01D |
| X | US 2017/244037 A1 (ZHANG RUIQIN [HK] ET AL) 24 August 2017 (2017-08-24) * example 1 * ----- | 1-11 | |

~~The present search report has been drawn up for all claims~~

| Place of search | Date of completion of the search | Examiner |
|---|---|---|
| The Hague | 23 March 2020 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................
& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

[X] None of the further search fees have been paid within the fixed time limit. The present European search report has been drawn up for those parts of the European patent application which relate to the invention first mentioned in the claims, namely claims:

1-11

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

```
1. claims: 1-11

      Method of preparing crystallin PTI
                    ---

2. claims: 12(completely); 15, 16(partially)

      Method for preparing atom thick PTI from crystallin PTI
                    ---

3. claims: 13, 14(completely); 15, 16(partially)

      Method for, gas filters and use of them
                    ---
```

## ANNEX TO THE EUROPEAN SEARCH REPORT
## ON EUROPEAN PATENT APPLICATION NO.

EP 19 20 3932

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2020

| Patent document cited in search report | Publication date | Patent family member(s) | Publication date |
|---|---|---|---|
| US 2017244037 A1 | 24-08-2017 | NONE | |

EPO FORM P0459

For more details about this annex : see Official Journal of the European Patent Office, No. 12/82

# EP 3 808 700 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MILLER et al.** *Physical Chemistry Chemical Physics,* 2017, vol. 24, 15613
- **DEMAZEAU et al.** *Rev. High Pressure Sci. Technol.,* 1998, vol. 7, 1345-1347
- **BOJDYS et al.** *Chem. - A Eur. J,* 2008, vol. 14, 8177-8182
- **WIRNHIER et al.** *Chem. - A Eur. J.,* 2011, vol. 17, 3213-3221
- **SCHWINGHAMMER et al.** *Angew. Chemie Int. Ed.,* 2013, vol. 52, 2436-2439
- **MILLER et al.** *Nano Lett.,* 2017, vol. 17, 5891-5896
- **JIA et al.** *Angew. Chemie.,* vol. 130, 12838-12842
- **KESSLER et al.** *Nat. Rev. Mater.,* 2017, vol. 2, 17030
- **SWIHART et al.** *Energy Environ. Sci.,* 2017, vol. 00, 1-3
- **PESIRI et al.** *J. Memb. Sci.,* 2003, vol. 218, 11-18
- **CHOI et al.** *J. Am. Chem. Soc.,* 2010, vol. 132, 448-449
- **RAMASUBRAMANIAN et al.** *AIChE J.,* 2013, vol. 59, 1033-1045
- **WANG et al.** *J. Memb. Sci.,* 2014, vol. 450, 425-432
- **KANEZASHI et al.** Advances in Bioceramics and Porous Ceramics II. John Wiley & Sons, Ltd, 2010, 229-239
- **BRINKER et al.** *MRS Proc.,* 1994, vol. 368, 329
- **GASCON et al.** *Chem. Mater.,* 2012, vol. 24, 2829-2844
- **SHOLL et al.** *Nature,* 2016, vol. 532, 435-437
- **ZOLANDZ et al.** Membrane Handbook. Springer, 1992, 78-94
- **WINTERHALDER et al.** *Sep. Purif. Technol.,* 2017, vol. 189, 433-440
- **SUNARSO et al.** *Sep. Purif. Technol.,* 2017, vol. 176, 335-383
- **MCDERMOTT et al.** *J. Phys. Chem. C.,* 2013, vol. 117, 8806-8812
- **GIANNOZZI et al.** *J. Phys. Condens. Matter.,* 2009, vol. 21, 395502
- **PERDEW et al.** *Phys. Rev.,* 1996, vol. 77, 3865-3868
- **GRIMME et al.** *J. Chem. Phys.,* 2010, vol. 132, 154104
- **PRANDINI et al.** *npj Comput. Mater.,* 2018, vol. 4, 72
- **MONKHORST.** *Phys. Rev. B.,* 1976, vol. 13, 5188-5192
- **HE et al.** *Adv. Funct. Mater.,* 2018, vol. 28, 1707427